# EUROPEAN PATENT APPLICATION

(11) **EP 0 716 805 A1**
(43) Date of publication of application: **19.06.1996**
(21) Application number: 95500168.0
(22) Date of filing: 14.12.1995
(51) Int. Cl.: A01G 27/00

(54) **Jardiniere with electronic irrigation**

(30) Priority: 15.12.1994 ES 9403221 U
(71) Applicant: Barrero Serrano, Pedro José, E-09003 Burgos (ES)
(72) Inventor: Barrero Serrano, Pedro José, E-09003 Burgos (ES)

(57) **Abstract**

Jardiniere with electronic irrigation, characterized in that it detects the wet in the soil by means of an electronic controller (1), shown in Fig. 7, controlling this wet, in accordance with the wet previously considered as necessary for plant in the jardiniere. When the wet detected by a probe (2) decreases, a pump (3) will activate, absorbing water via a suction piping (4), carrying out the irrigation thru a distribution pipe (8),which can exhibit different geometrical shapes. When the water in the tank (7) depletes, the probe (6) sends a signal to the electronic controller (1), which activates a buzzer indicating a lack of water, and, at the same time, the pump will stop, so avoiding it to operate idle. The probe (5) will send a signal indicating that there is a sufficient amount of water when the tank (7) is refilled, by means of a LED turned on.

## Description

The present invention refers, as above stated, to a jardiniere with electronic irrigation, which has been designed and realized in order to obtain numerous and outstanding advantages in relation to the existing jardinieres.

The jardiniere with electronic irrigation of the invention has been designed to control the irrigation of any type of both indoor and outdoor plants, its operation being based on the amount of water which is necessary for each plant.

At present, different jardiniere systems are known, in which the irrigation is carried out in a manual way (this being called "with no automatic irrigation"), and there are also other systems having a tank which is housed in their lower part, by virtue of which the water is absorbed by capillarity, so creating a wet soil ( thisbeing known as " automatic irrigation").

In both cases, the plants are not provided with an adequate wet,and they dry up, or an excess water may generate fungus, and a great care and attention are needed in order to obviate these problems.

The novel jardiniere with electronic irrigation avoids this care and attention, and provides the plant wit a correct wet. The description of the equipment is as follows:-

An electrotronic circuit, with a sensor which generates a voltage which is equalized with the reference voltage; when the sensor voltage is equal to that of reference, a relay is triggered, operating a pump, being the base of an integrated circuit performing a compator and inverter function. The reference voltage is set by means of a potentiometer, and, in this manner, the wet of the plant can be set in each type of soil and for each type of plants. A controller has other dual circuit for detecting the amount of water contained in the tank, both its lower and upper levels, on the basis of the same above described technique . Also, when the lower level is activated, the pump automatically stops, so avoiding it to operate idle.

For a better understanding of the functions performed by the jardiniere of the invention, a set of drawings are attached, the figures of which show views and details in which the most specific points are described as follows:-

Figure 6 shows a perspective view of the assembly, illustrating the different elements composing the jardiniere.

Figure 7 shows:
1. An electronic controller.
2. A probe for detecting the wet of the soil.
3. A suction pum.
4. A suction piping.
5. Probe for detecting the upper water level.
6. Probe for detecting the lower water level.
7. Water tank.
8. Water distribution piping in the jardiniere.
9. Jardiniere container.
10. Wet controller.
11. Red intermittent pilot warnig the of lack water.
12. Green pilot indicating that the amount of water is sufficient.

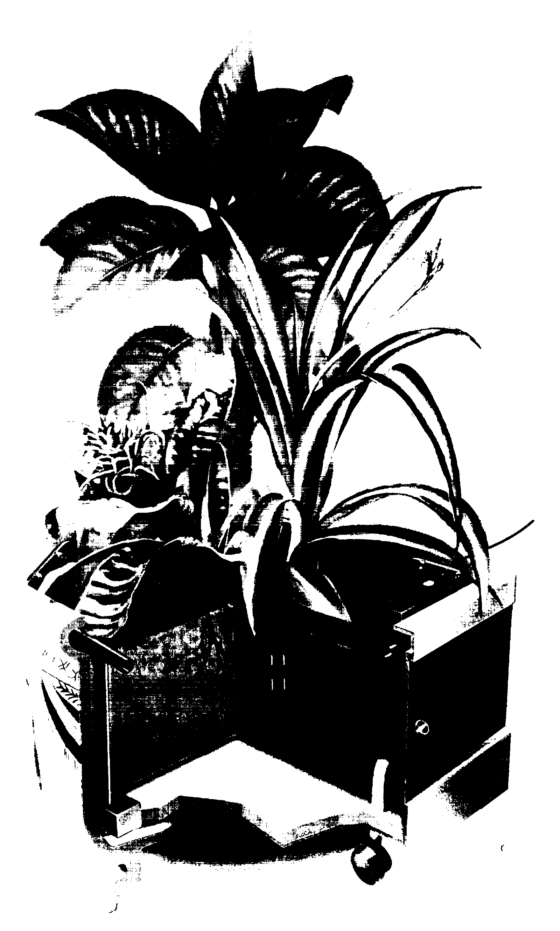

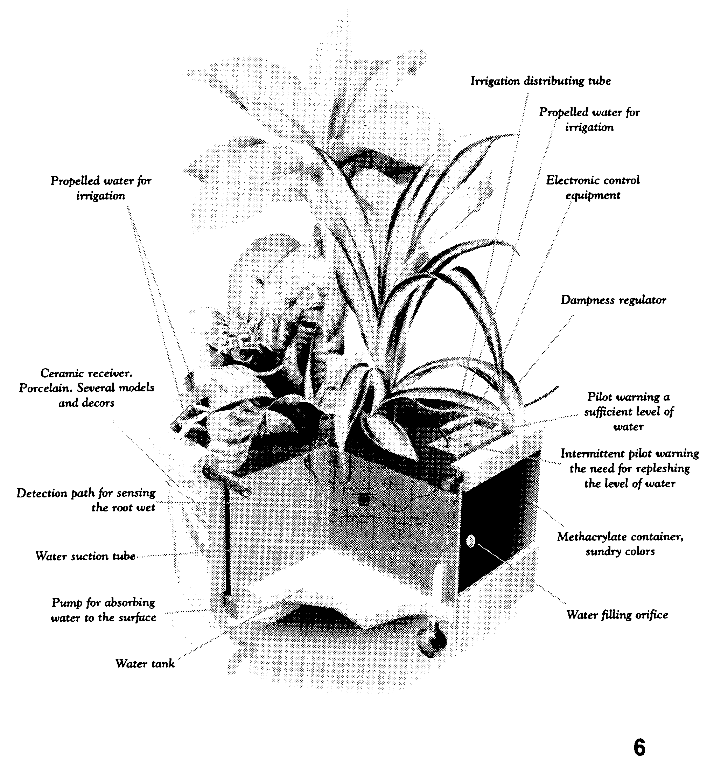

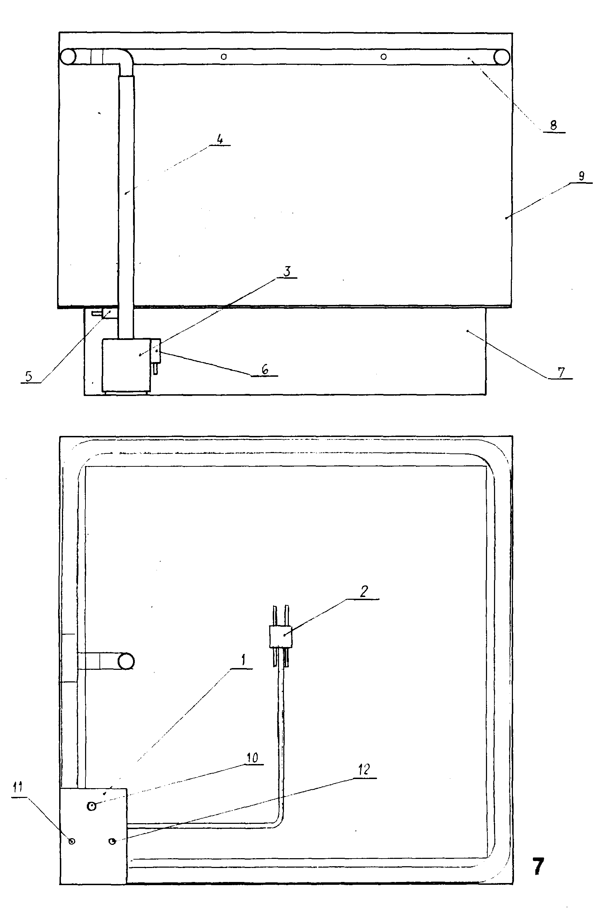

On the basis of the above set forth, the present invention can improve the plant irrigation, since by controlling the water which is sufficient for the plant roots, the water necessary for their growthwill be only provided.

The care of same will be eliminated, by refilling the water tank only when the red intermittent pilot tums on (or a buzzer sounds if used instead of the pilot), waming that the water in the tank is below the appropiate level, the pump stopping at the same time so that it does not operate idle.

## Claims

1. Jardiniere with electronic irrigation, characterized in that it detects the wet in the soil by means of an electronic controller (1), shown in Fig. 7, controlling this wet, in accordance with the wet previously considered as necessary for plant in the jardiniere. When the wet detected by a probe (2) decreases, a pump (3) will activate , absorbing water via a suction piping (4), carrying out the irrigation thru a distribution pipe (8), which can exhibit different geometrical shapes.

2. When the water in the tank (7) depletes, the probe (6) sends a signal to the electronic controller (1), which activates a buzzer indicating a lack of water, and, at the same time, the pump will stop, so avoiding it to operate idle. The probe (5) will send a signal indicating that there is a sufficient amount of water when the tank (7) is refilled, by means of a LED turned on.
